# EUROPEAN PATENT APPLICATION

(11) **EP 3 018 964 A1**
(43) Date of publication of application: **11.05.2016**
(21) Application number: 14192113.0
(22) Date of filing: 06.11.2014
(51) Int. Cl.: H04W 76/02

(54) **Broadcast at MBSFN granularity in MBMS distributed architecture**

(71) Applicant: ALCATEL LUCENT, 92100 Boulogne-Billancourt (FR)
(72) Inventor: Godin, Philippe, 91620 Nozay (FR)
(74) Representative: Cabinet Camus Lebkiri

(57) **Abstract**

Method to broadcast at Multicast-Broadcast Single Frequency Network (MBSFN) area granularity in a Multimedia Broadcast Multicast Service (MBMS) distributed architecture, the architecture comprising a Mobility Management Entity (MME) node, a first evolved Node B (eNodeB) node connected to the MME node, a second eNodeB node connected to the MME Node, a first cell of the first eNodeB node, a second cell of the second eNodeB node and a Multicast-Broadcast Single Frequency Network (MBSFN) area to which the first cell pertains and to which the second cell pertains, the method comprising:
- configuring, in the first node, a mapping, for the MBSFN area, between an MBSFN area identifier and a first cell identifier and between the MBSFN area identifier and a second cell identifier;
- configuring, in the second node, said mapping;
- receiving, by the MME node of the architecture, an MBMS Session Start message including the first cell identifier;
- sending, by the MME node the MBMS Session Start message to the first node and to the second node;
- receiving the MBMS Session Start message by the first node;
- broadcasting, by the first node, on the first cell, according to the presence of the first cell identifier in said mapping;
- receiving the MBMS Session Start message by the second node;
- broadcasting, by the second node, on the second cell, according to the presence of the first cell identifier and according to the presence of the second cell identifier, in said mapping.

## Description

### Field of invention

This disclosure concerns generally the domain of communication networks and more particularly the domain of LTE (long term evolution) and LTE-Advanced networks having a distributed MBMS (Multimedia Broadcast Multicast Service) service. The abbreviations used below have hence the ordinary meaning intended in 3GPP (Third Generation Partnership Project) standards for these networks.

In the present disclosure, the words "a cell identifier" are intended to be equivalent to "an identifier of the cell" or to "an identifier for the cell".

### BackGround

In the context of the feature GCSE for public safety (Group Communication System Enablers) the GCS AS (GCSE Server) newly needs to broadcast on a specific list of cells using the MBMS (Multimedia Broadcast Multicast Service) service (to be studied in release 13 of 3GPP). In order to limit the broadcast area, it is desired to deliver the MBMS service over the smallest set of MBSFN (Multicast-Broadcast Single Frequency Network) areas which comprise all the cells involved in the list. This changes the current MBMS delivery scheme based on service area.

Because the GCS AS doesn't know the current mapping between cells and MBSFN areas in the MBMS network, it is necessary that some MBMS entity performs the mapping: either BMSC (Broadcast Multicast Service Centre), MBMS GW MBMS (Multimedia Broadcast and Multicast Service GateWay ), MME(Mobility Management Entity) or MCE (Multi-Cell/Multicast Communication Entity).

One possible solution would be to have the MCE do this mapping. In that solution, the GCS AS would newly include the list of involved cells in the MBMS Session Start message, this is propagated via the MBMS GW and MME towards connected MCEs (e.g. using the included SAls or Service Application Identifiers of prior art) and each MCE could infer from the received list of cells the impacted MBSFN areas and propagate the Session Start message only to the eNBs involved by the impacted MBSFN areas.

This solution however could only work in the case of centralized MBMS architecture where one MCE has the full control of an MBSFN area and knows the list of cells it comprises.

However it cannot be applicable to the case of distributed MBMS architecture (as defined in TS36.300) where an MBSFN can span across multiple MCE(eNB)s. These eNodeBs of a distributed MBMS architecture of a telecommunication network, will be represented below by the symbol eNB(MCE) or shortened in eNB.

### Summary

There is no satisfying solution currently solving this problem in MBMS distributed architecture. If the MME forwards the MBMS Session Start received from the MBMS GW including the list of cells blindly to all the eNB(MCE)s it connects to, an eNB (MCE) receiving the message cannot determine if it is actually involved in the broadcast or not. For example, one can imagine that one MBSFN area spans across eNB1 and eNB2 and only cell 2 of eNB2 is included in the Session Start message, then eNB2 will determine that it is involved but eNB1 cannot determine that cell 2 actually belongs to an MBSFN area shared with eNB1. eNB1 will therefore not broadcast. In the case of public safety discussed here, this is not acceptable as the message is of critical nature (police officer order or firemen coordination).

Another issue is that all eNB(MCE)s connected to the MME receive the message, including those which are not at all involved in any MBSFN areas targeted for this broadcast. This leads all these eNB(MCE)s need to fail the MBMS Session Start message (send back MBMS Session Start Failure) and create useless signalling across the MBMS signalling network.

In this context, it is disclosed a method to broadcast at Multicast-Broadcast Single Frequency Network (MBSFN) area granularity in a Multimedia Broadcast Multicast Service (MBMS) distributed architecture, the architecture comprising a Mobility Management Entity (MME) node, a first evolved Node B (eNodeB) node connected to the MME node, a second eNodeB node connected to the MME Node, a first cell of the first eNodeB node, a second cell of the second eNodeB node and a Multicast-Broadcast Single Frequency Network (MBSFN) area to which the first cell pertains and to which the second cell pertains, the method comprising:
- configuring, in the first node, a mapping, for the MBSFN area, between an MBSFN area identifier and a first cell identifier and between the MBSFN area identifier and a second cell identifier;
- configuring, in the second node, said mapping;
- receiving, by the MME node of the architecture, an MBMS Session Start message including the first cell identifier;
- sending, by the MME node the MBMS Session Start message to the first node and to the second node;
- receiving the MBMS Session Start message by the first node;
- broadcasting, by the first node, on the first cell, according to the presence of the first cell identifier in said mapping;
- receiving the MBMS Session Start message by the second node;
- broadcasting, by the second node, on the second cell, according to the presence of the first cell identifier and according to the presence of the second cell identifier, in said mapping.

It is also disclosed a method to broadcast at Multicast-Broadcast Single Frequency Network (MBSFN) area granularity in a Multimedia Broadcast Multicast Service (MBMS) distributed architecture, the architecture comprising a Mobility Management Entity (MME) node, a first evolved Node B (eNodeB) node connected to the MME node, a second eNodeB node connected to the MME Node, a first cell of the first eNodeB node, a second cell of the second eNodeB node and a Multicast-Broadcast Single Frequency Network (MBSFN) area, the method comprising:
- configuring, in the MME node, a first partial mapping between an MBSFN area identifier and a first cell identifier;
- configuring, in the MME node, a second partial mapping between the MBSFN area identifier and a second cell identifier;
- configuring the first eNodeB for involving the first cell in the MBSFN area;
- configuring the second eNodeB for involving the second cell in the MBSFN area,
- receiving, by the MME node, an MBMS Session Start message including the first cell identifier;
- adding to the MBMS Session Start message the MBSFN area identifier according to the presence of the first cell identifier in the first partial mapping or in the second partial mapping, to obtain an enhanced MBMS Session Start message;
- sending, by the MME, to the first node, the enhanced MBMS Session Start message;
- receiving by the first node, the MBSFN area identifier in the enhanced MBMS Session Start message, and correspondingly broadcasting, by the first node, on the first cell;
- sending, by the MME, to the second node, the enhanced MBMS Session Start message;
- receiving, by the second node, the MBSFN area identifier in the enhanced MBMS Session Start message, and correspondingly broadcasting, by the second node on the second cell.

In variants of the above method:
- an M3 Setup Request Message is used, by the first node, for configuring, in the MME node, the first partial mapping and an M3 Setup Request Message is used, by the second node, for configuring, in the MME node, the second partial mapping.
- an M3AP MCE configuration update message is used, by the first node, for updating, in the MME node, the configured first partial mapping and an M3AP MCE configuration update message is used, by the second node, for updating, in the MME node, the configured second partial mapping.

It is also disclosed a distributed Multimedia Broadcast Multicast Service (MBMS) architecture comprising a first evolved Node B (eNodeB) node, a second evolved Node B (eNodeB) node, a first cell of the first eNodeB node, a second cell of the second eNodeB node, a Multicast-Broadcast Single Frequency Network (MBSFN) area including the first cell and including the second cell, in which the first eNodeB node comprises a mappping between an identifier for the MBSFN area and an identifier of the first cell and between the identifier for the MBSFN area and an identifier of the second cell.

It is also disclosed a distributed Multimedia Broadcast Multicast Service (MBMS) architecture comprising a Mobility Management Entity (MME) node, a first evolved Node B (eNodeB) node connected to the MME node, a second evolved Node B (eNodeB) node connected to the MME node, a first cell of the first eNodeB node, a second cell of the second eNodeB node, a Multicast-Broadcast Single Frequency Network (MBSFN) area including the first cell and including the second cell, in which the MME node comprises a mapping between an MBSFN area identifier and an identifier of the first cell and between the MBSFN area identifier and an identifier of the second cell.

It is also disclosed an eNodeB node for use according to the first method in which said mapping is a mapping configured in the eNB.

It is also disclosed an eNodeB node comprising means for identifying an MBSFN area identifier, according to the reception of an MBMS Session Start message including a cell identifier of a cell belonging to the MBSFN area and not belonging to said eNodeB node, and comprising means for identifying, according to the MBSFN area identifier, the list of cell identifiers of cells of said eNodeB node belonging to the MBSFN area.

It is also disclosed an MME node for use according to the second method in which said mapping is a mapping configured in the MME.

It is also disclosed an MME node for use according to the second method in which said mapping is a mapping configured through the M3AP M3 setup request message enhanced with a list of mappings of MBSFN area to cells.

It is also disclosed an MME node for use according to the second method in which said mapping is a mapping configured through a M3AP M3 message enhanced with a list of mappings of MBSFN area to cells.

It is also disclosed an MME node for use according to the second method, in which said mapping comprises means for identifying, according to the reception of an MBMS Session Start message including any cell of the MBSFN area, a list of eNodeB nodes involved in said MBSFN area.

In a variant of the above MME node, said mapping comprises means for adding to each MBMS Session Start message sent to one of the enodeBs of said list of eNodeB nodes involved in said MBSFN area, a list of cells of the MBSFN area and of said one of the enodeBs.

It is also disclosed an eNodeB node for use with the above MME node, comprising means for receiving an MBMS Session Start message including the above list of cells and for broadcasting on said list of cells.

It is also disclosed an MME node for use according to the second method, in which said mapping comprises means for identifying, according to the reception of an MBMS Session Start message including any cell of the MBSFN area, said MBSFN area identifier and comprises means for adding said MBSFN area identifier to the MBMS Session Start message.

It is also disclosed an eNodeB node for use with the above MME node, comprising means for receiving an MBMS Session Start message including said MBSFN area identifier and for broadcasting on the ones of its cells which belong to said MBSFN area identifier.

### Brief description of the figures

Two embodiments are disclosed in the following description below, in order to solve among others, the issues in distributed MBMS architecture described here-above.

These embodiments will be better understood in reference to the list of figures below, in which, in a distributed MBMS architecture:

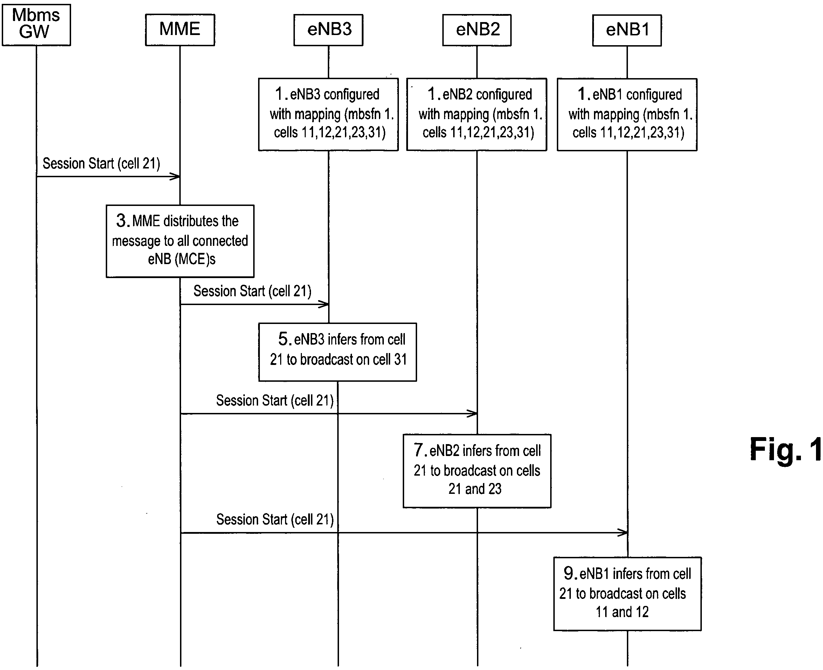

- Figure 1 discloses a first embodiment in which is made a configuration of eNodeB (eNB) nodes connected to an MME node in a communication network by a mapping between a reference to an MBSFN area and the list of those cells of the nodes which are involved in the MBSFN area, the mapping being stored in the eNB nodes.

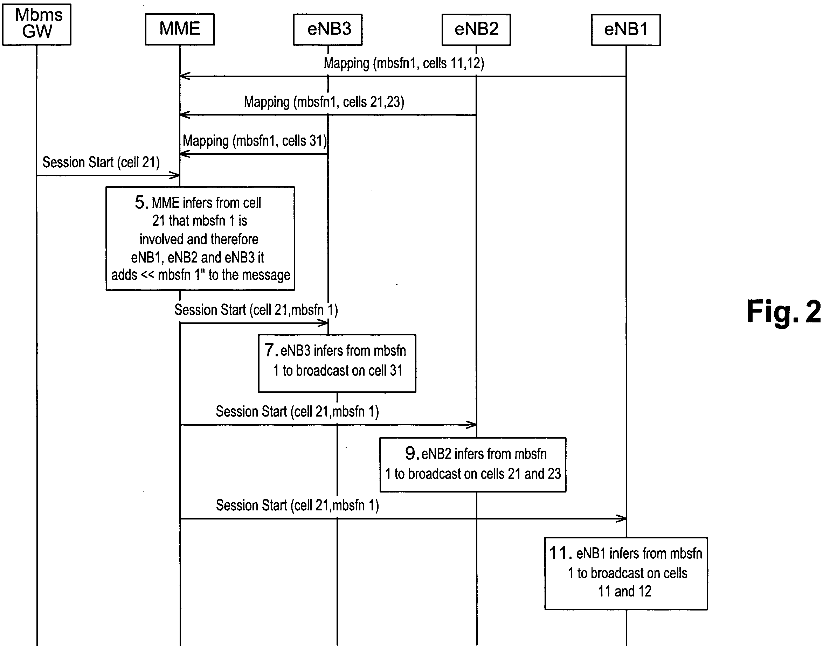

- Figure 2 discloses a second embodiment in which is made a configuration of an MME node connected to a set of eNB nodes, by the transmission by each node in the set to the MME of a mapping between a reference to a single MBSFN area and the cells of said each node, which belong to said single area and the inferring by the MME node from these transmissions that the single area is involved in an MBMS session starting for any cell of any of the mappings and resulting in the addition of a reference to the area to the MBMS Session Start message including any of such cells, which has been receivedby the MME node from a MBMS GW node.

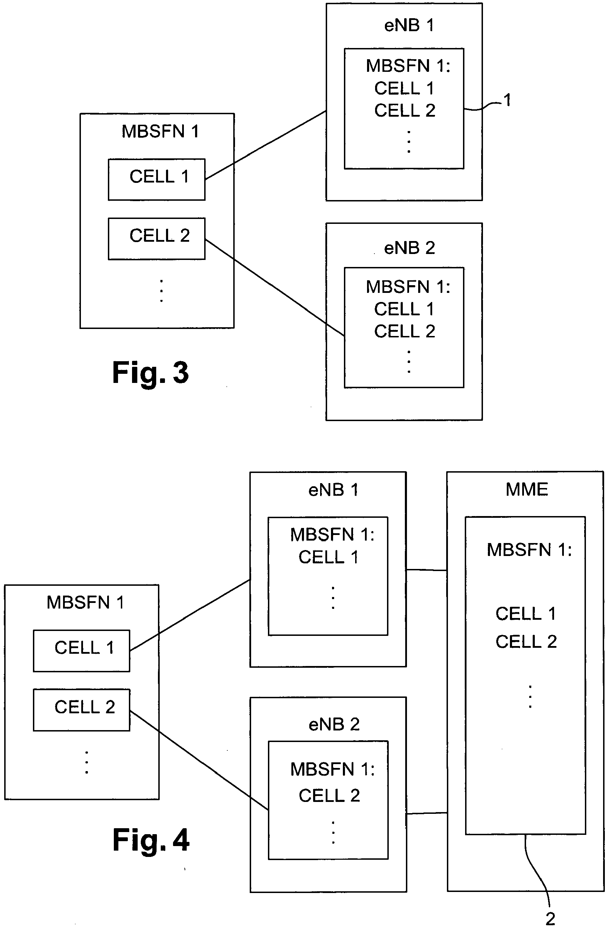

- Figure 3 discloses a distributed MBMS architecture comprising several cells and particularly a first cell (CELL1) belonging to a first eNB node (eNB1) and a second cell (CELL2) belonging to a second eNB node (eNB2), the cells being involved in an MBSFN area (MBSFN1). A first mapping (1), between the MBSFN area and the cells (MBSFN: CELL1,CELL2, ...), is stored in the first eNB (eNB1). A second mapping, comprising the same information as the first mapping (1) is preferably stored in the second eNB (eNB2).
- Figure 4 discloses a distributed MBMS architecture comprising a first cell (CELL1) of a first eNodeB node and a second cell (CELL2) of a second eNodeB node, first cell and second cell being involved in an MBSFN area (MBSFN1) among other cells. A mapping (2) between the MBSFN area and the first cell and also between the MBSFN area and the second cell (MBSFN 1: CELL1,CELL2, ...) is stored in an MME node (MME) of the architecture. The mapping lists among others the first cell and the second cell. The mapping is obtained by the fusion in the MME under the same MBSFN area identifier of a first partial mapping for the MBSFN area transmitted by the first eNodeB, an a second partial mapping for the MBSFN area transmitted by the second eNodeB. Said first partial mapping lists the first cell among others and is stored in the eNB1. Said second partial mapping for the MBSFN area, lists the second cell among others and is stored in the eNB2. The partial mappings are sent to the MME by the eNodeB1 and eNodeB2 node via telecommunication interfaces of the telecommunication network to which the MME and the eNodeBs belong.

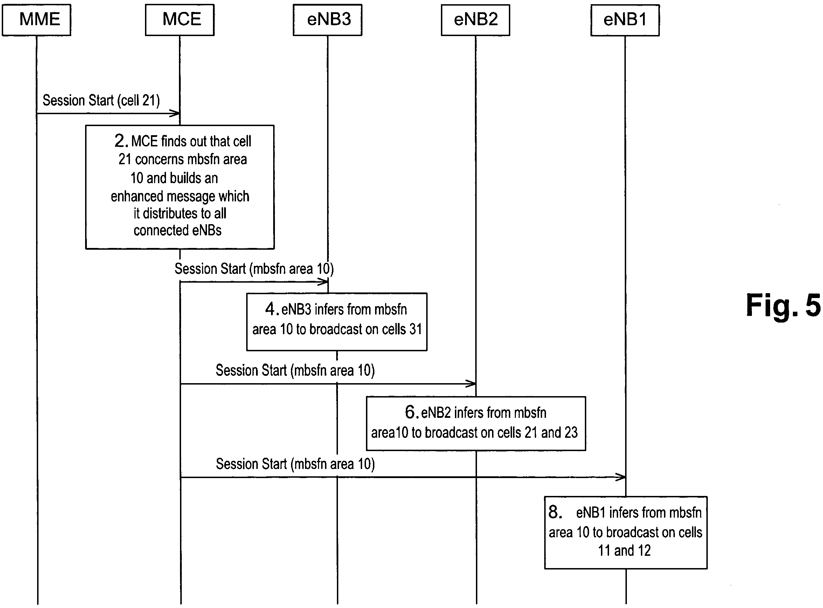

Figure 5 discloses another embodiment for an MBMS centralized architecture.

### Description of embodiments

In a first embodiment, each eNB is newly configured with the full list of cells comprising any MBSFN area it is part of, including cells of other eNBs. Given that one key characteristic of the new feature (broadcast by GCS AS on a specific list of cells) is to address small MBSFN areas (typically of one, two or three eNBs) - otherwise current service area based MBMS delivery mechanism would have been sufficient - the configuration effort remains small.

For example, it is considered an eNB1 is involved in two MBSFN areas 1 and MBSFN area 2 with cells 11 and 12 belonging to MBSFN area 1 and cells 13 and 14 belonging to MBSFN area 2.

If MBSFN 1 includes also cells 21 and 23 of eNB2 and cell 31 of eNB3, eNB1 will be configured with the full mapping i.e. MBSFN area 1 = (cell 11, 12, 21, 23, 31). Then when the MBMS Session Start message arrives including e.g. cell 21 in the list of cells, eNB1 determines that MBSFN area 1 is involved and therefore it starts broadcasting in cells 11 and 12.

This first embodiment can be summarized as "any cell id becomes an entry point designating an MBSFN area it belongs to".

This first embodiment or solution can be implemented as a method comprising the following steps (eNB here refers to eNB(MCE)):
- In step 1 eNB1, eNB2 and eNB3 which are involved in MBSFN area 1 are configured with the list of all cells pertaining to MBSFN area 1 i.e. not only their cells but also the cells of MBSFN area 1 which belong to other eNBs.
- In step 2 the MME receives the MBMS Session Start including cell 21
- In step 3 the MME decides to propagate the message to all connected eNB (MCE)s
- In step 4, eNB3 receives the Session Start message.
- In step 5, eNB3 infers from cell 21 that it shall broadcast the message on cell 31
- In step 6, eNB2 receives the Session Start message
- In step 7, eNB2 infers from cell 21 that it shall broadcast the message on cells 21 and 23
- In step 8, eNB1 receives the Session Start message
- In step 9, eNB1 infers from cell 21 that it shall broadcast the message on cells 11 and 12

In a second embodiment, each eNB (MCE) newly reports to the MME the list of MBSFN areas it supports per cell and the MME stores this mapping per cell. When the MBMS Session Start arrives at the MME, the MME determines from the included list of cells all MBSFN areas and eNBs involved and then, MME adds to the MBMS Session Start message the list of MBSFN areas it has found before propagating the message to all found involved eNB (MCE)s. Then each eNB(MCE) infers from the received list of MBSFN areas in which cells they should broadcast.

Taking the same example as above, eNB1 reports that cells 11 and 12 belong to MBSFN area 1, eNB2 reports that cells 21 and 23 belong to MBSFN area 1 and eNB3 reports that cell 31 belongs to MBSFN area 1 e.g. in the M3 Setup Request message. MME stores this information. When MME receives the session start which includes cell 21, it infers that MBSFN area 1 is involved. It can also infer from stored information that eNB1, eNB2 and eNB3 are involved by MBSFN area 1. MME then adds "MBSFN area 1" to the MBMS Session Start message before sending it to eNB1, eNB2 and eNB3. When eNB1 receives the message including MBSFN area 1 it knows it shall broadcast on cells 11 and 12 and similarly eNB2 determines that it shall broadcast on cells 21 and 23 and eNB3 determines that it shall broadcast on cell 31.

This second embodiment can be implemented as a method comprising the following steps (eNB here refers to eNB (MCE))
- In step 1 the eNB1 indicates cells 11 and 12 belong to MBSFN area 1 (one typical message to use is the M3 Setup Request message)
- In step 2 the eNB2 indicates cells 21 and 23 belong to MBSFN area 1(one typical message to use is the M3 Setup Request message)
- In step 3 the eNB3 indicates cell 31 belongs to MBSFN area 1(one typical message to use is the M3 Setup Request message)
- In step 4 the MME receives the MBMS Session Start including Cell 21.
- In step 5 the MME infers from cell 21 that MBSFN area 1 is involved and therefore eNB1, eNB2, eNB3 and adds "MBSFN 1" to the message
- In step 6,7 the MME sends the enhanced message to eNB3 which infers from included MBSFN 1 that it shall broadcast on cell 31
- In step 8,9 the MME sends the enhanced message to eNB2 which infers from included MBSFN 1 that it shall broadcast on cells 21 and 23
- In step 10,11 the MME sends the enhanced message to eNB1 which infers from included MBSFN 1 that it shall broadcast on cells 11 and 12

This second embodiment can be summarized again as "any cell id becomes an entry point designating an MBSFN area it belongs to"

This disclosure provides an efficient solution to broadcast messages originated from the GCS AS only to the smallest broadcast area possible corresponding to the list of cells in which public safety users are involved (feature requested for 3GPP release 13). More precisely the messages are delivered to the smallest set of MBSFN areas which comprise the list of involved cells. The unique benefit of this disclosure is to make this happen even in a MBMS network with distributed MCE architecture.

One advantage of the solutions described above is to go beyond the current MBMS broadcast mechanism which is based on the granularity of service area identities. That granularity is not sufficient for the intended feature as it has been reported recently in 3GPP due to e.g. insufficient range of SAls. In contrast, the disclosure offers a solution which matches the granularity of MBSFN areas (which can be smaller than SAIs) and works in an MBMS distributed architecture. Therefore, without the disclosure, either the broadcast area is too large than necessary, or, some cells are not broadcast which is very critical for public safety if this is an order from police officer or fireman captain involved in a critical event.

The above solutions are therefore candidates to be standardized in 3GPP.

The public safety oriented MBMS evolutions are susceptible of providing useful industrial applications for deployments based on MBMS distributed architectures fitted with the above embodiments.

In case the above embodiments were to be standardized by 3GPP, the support of the above second embodiment can be achieved by an eNB node by monitoring the M3 interface for the second proposed solution or by monitoring the OEM interface of the eNB for the first proposed solution.

This disclosure concerns both an architecture concept and a product implementation to be used for the efficient delivery of public safety messages in case of critical events.

In this disclosure:
- the steps of broadcasting, by a node, on a cell, according to the presence of one or several cell identifiers in said mapping can also be interpreted as: if the one or several cell identifiers are included within the mapping, then the node will process with the broadcasting on the cell;
- the broadcasting can for example involve the broadcasting of a message, a data flow, or any other element transported within a telecommunication network;
- the configuration steps of the methods can, in some embodiments, be realized prior to the use of the method. If these configuration steps are realized prior to the use of the method, there is no need to modify the other steps of the method. These two configuration steps don't participate to the broadcasting as such.

This disclosure also comprises another embodiment for an MBMS centralized architecture in which the BMSC includes the list of cells where the broadcast is desired together with the corresponding list of SAls in the MBMS Session Start message. The routing in the EPC (Evolved Packet Core) nodes is kept as in the state of art i.e. based on list of SAls. Thus, MBMS GW and MME propagate down the received message based on the included list of SAls as in the systems of the state of the art.

When the MCE receives the MBMS Session Start, it takes each individual included cell id and finds out which MBFSN area comprises it. To achieve this, for each MBFSN area which it manages, the MCE does a parsing of the list of cells defining that MBFSN area. When a matching MBFSN area is found, the MCE builds an enhanced MBMS Session Start message and then proceeds according to one of the following embodiments:
In one embodiment, the enhanced MBMS Session Start built by MCE is adding on top the found MBFSN area. Then MCE sends this enhanced message to all the connected eNBs. Each receiving eNB infers from the received MBFSN area the cells in which it should broadcast. If the receiving eNB is not concerned by the included MBFSN area, it discards or ignores or rejects the message without broadcasting this message.

The figure 5 presents the above embodiment. For simplification, it is considered here that the MME sends an MBMS Session Start in which the included list of cells contains only one cell (cell 21) which belongs to eNB2. For simplicity the MBFSN area 10 comprises the cells 11 and 12 of eNB1, the cells 21 and 23 of eNB2 and the cell 31 of eNB3.
- In step 1 the MCE receives the MBMS Session Start from the MME included the cell 21 on top of the today list of SAls.
- In step 2 the MCE finds out that cell 21 concerns MBFSN area 10 by parsing the content of the list of cells that constitutes MBFSN area 10. Then MCE builds an enhanced MBMS Session Start message which newly includes MBFSN area 10. Then MCE sends that enhanced message to all its connected eNBs.
- In step 3 the MCE sends the enhanced MBMS Session Start message to eNB3.
- In step 4, eNB3 infers from received MBFSN area 10 that it shall broadcast on cell 31.
- In step 5, the MCE sends the enhanced MBMS Session Start message to eNB2.
- In step 6, eNB2 infers from received MBFSN area 10 that it shall broadcast on cells 21 and 23.
- In step 7, the MCE sends the enhanced MBMS Session Start message to eNB1
- In step 8, eNB1 infers from received MBFSN area 10 that it shall broadcast on cells 11 and 12.

In another embodiment, the enhanced MBMS Session Start built by MCE is adding on top the found MBFSN area. Then MCE only sends enhanced message to involved eNBs. It calculates the involved eNBs by taking the most relevant bits, for example the 20 leftmost bits of all the cell ids that constitutes the found MBFSN area. Each receiving eNB infers from the received MBFSN area the cells in which it should broadcast.

In another embodiment, the MCE first calculates the eNBs involved in the found MBFSN area by taking the most relevant bits, for example the 20 leftmost bits of all the cell ids that constitutes the found MBFSN area. For each involved eNB x, the MCE builds an enhanced message adding on top the list of eNB x cells that are part of the found MBFSN area and sends that enhanced message to eNBx. eNBx receiving that enhanced message broadcast in the cells which have been included by MCE.

## Claims

1. Method to broadcast at Multicast-Broadcast Single Frequency Network (MBSFN) area granularity in a Multimedia Broadcast Multicast Service (MBMS) distributed architecture, the architecture comprising a Mobility Management Entity (MME) node, a first evolved Node B (eNodeB) node connected to the MME node, a second eNodeB node connected to the MME Node, a first cell of the first eNodeB node, a second cell of the second eNodeB node and a Multicast-Broadcast Single Frequency Network (MBSFN) area to which the first cell pertains and to which the second cell pertains, the method comprising:
- configuring, in the first node, a mapping, for the MBSFN area, between an MBSFN area identifier and a first cell identifier and between the MBSFN area identifier and a second cell identifier;
- configuring, in the second node, said mapping;
- receiving, by the MME node of the architecture, an MBMS Session Start message including the first cell identifier;
- sending, by the MME node the MBMS Session Start message to the first node and to the second node;
- receiving the MBMS Session Start message by the first node;
- broadcasting, by the first node, on the first cell, according to the presence of the first cell identifier in said mapping;
- receiving the MBMS Session Start message by the second node;
- broadcasting, by the second node, on the second cell, according to the presence of the first cell identifier and according to the presence of the second cell identifier, in said mapping.

2. Method to broadcast at Multicast-Broadcast Single Frequency Network (MBSFN) area granularity in a Multimedia Broadcast Multicast Service (MBMS) distributed architecture, the architecture comprising a Mobility Management Entity (MME) node, a first evolved Node B (eNodeB) node connected to the MME node, a second eNodeB node connected to the MME Node, a first cell of the first eNodeB node, a second cell of the second eNodeB node and a Multicast-Broadcast Single Frequency Network (MBSFN) area, the method comprising:
- configuring, in the MME node, a first partial mapping between an MBSFN area identifier and a first cell identifier;
- configuring, in the MME node, a second partial mapping between the MBSFN area identifier and a second cell identifier;
- configuring the first eNodeB for involving the first cell in the MBSFN area;
- configuring the second eNodeB for involving the second cell in the MBSFN area,
- receiving, by the MME node, an MBMS Session Start message including the first cell identifier;
- adding to the MBMS Session Start message the MBSFN area identifier according to the presence of the first cell identifier in the first partial mapping or in the second partial mapping, to obtain an enhanced MBMS Session Start message;
- sending, by the MME, to the first node, the enhanced MBMS Session Start message;
- receiving by the first node, the MBSFN area identifier in the enhanced MBMS Session Start message, and correspondingly broadcasting, by the first node, on the first cell;
- sending, by the MME, to the second node, the enhanced MBMS Session Start message;
- receiving, by the second node, the MBSFN area identifier in the enhanced MBMS Session Start message, and correspondingly broadcasting, by the second node on the second cell.

3. Method according to claim 2 in which an M3 Setup Request Message is used, by the first node, for configuring, in the MME node, the first partial mapping and in which said M3 Setup Request Message is used, by the second node, for configuring, in the MME node, the second partial mapping.

4. Method according to claim 3 in which an M3AP MCE configuration update message is used, by the first node, for updating, in the MME node, the configured first partial mapping and in which said M3AP MCE configuration update message is used, by the second node, for updating, in the MME node, the configured second partial mapping.

5. Distributed Multimedia Broadcast Multicast Service (MBMS) architecture comprising a first evolved Node B (eNodeB) node, a second evolved Node B (eNodeB) node, a first cell of the first eNodeB node, a second cell of the second eNodeB node, a Multicast-Broadcast Single Frequency Network (MBSFN) area including the first cell and including the second cell, in which the first eNodeB node comprises a mappping between an identifier for the MBSFN area and an identifier of the first cell and between the identifier for the MBSFN area and an identifier of the second cell.

6. Distributed Multimedia Broadcast Multicast Service (MBMS) architecture comprising a Mobility Management Entity (MME) node, a first evolved Node B (eNodeB) node connected to the MME node, a second evolved Node B (eNodeB) node connected to the MME node, a first cell of the first eNodeB node, a second cell of the second eNodeB node, a Multicast-Broadcast Single Frequency Network (MBSFN) area including the first cell and including the second cell, in which the MME node comprises a mapping between an MBSFN area identifier and an identifier of the first cell and between the MBSFN area identifier and an identifier of the second cell.

7. eNodeB node for use according to the method of claim 1 in which said mapping is a mapping configured in the eNB.

8. eNodeB node comprising means for identifying an MBSFN area identifier, according to the reception of an MBMS Session Start message including a cell identifier of a cell belonging to the MBSFN area and not belonging to said eNodeB node, and comprising means for identifying, according to the MBSFN area identifier, the list of cell identifiers of cells of said eNodeB node belonging to the MBSFN area.

9. MME node for use according to the method of claim 2 in which said mapping is a mapping configured in the MME.

10. MME node for use according to the method of claim 2 in which said mapping is a mapping configured through a M3AP M3 message enhanced with a list of mappings of MBSFN area to cells.

11. MME node for use according to the method of claim 2, in which said mapping comprises means for identifying, according to the reception of an MBMS Session Start message including any cell of the MBSFN area, a list of eNodeB nodes involved in said MBSFN area.

12. MME node for use according to the method of claim 2, in which said mapping comprises means for identifying, according to the reception of an MBMS Session Start message including any cell of the MBSFN area, said MBSFN area identifier and comprises means for adding said MBSFN area identifier to the MBMS Session Start message.

13. MME node according to claim 11 in which said mapping comprises means for adding to each MBMS Session Start message sent to one of the enodeBs of said list of eNodeB nodes involved in said MBSFN area, a list of cells of the MBSFN area and of said one of the enodeB nodes.

14. eNodeB node for use with MME node of claim 13, comprising means for receiving an MBMS Session Start message including a list of cells according to claim 13 and for broadcasting on said list of cells.

15. eNodeB node for use with MME node of claim 12, comprising means for receiving an MBMS Session Start message including an MBSFN area identifier according to claim 12 and for broadcasting on the ones of its cells which belong to said MBSFN area identifier.
